# EUROPÄISCHE PATENTANMELDUNG

(11) **EP 1 946 976 A2**
(43) Veröffentlichungstag der Anmeldung: **23.07.2008**
(21) Anmeldenummer: 07123102.1
(22) Anmeldetag: 13.12.2007
(51) Int. Cl.: B60R 21/0132

(54) **Erstes Steuergerät zur Bestimmung einer Gefährdung wenigstens eines Fahrzeuginsassen, zweites Steuergerät zur Ansteuerung eines elektromotorischen Gurtstraffers, Vorrichtung zur Ansteuerung eines elektromotorischen Gurtstraffers und Verfahren zur Ansteuerung eines elektromotorischen Gurtstraffers**

(30) Priorität: 22.01.2007 DE 102007003210
(71) Anmelder: ROBERT BOSCH GMBH, 70442 Stuttgart (DE)
(72) Erfinder: Henne, Ralf, 74343, Sachsenheim (DE); Otterbach, Jens, 71634, Ludwigsburg (DE); Eisele, Sybille, 71711, Murr (DE)

(57) **Zusammenfassung**

Es wird ein erstes Steuergerät zur Bestimmung einer Gefährdung wenigstens eines Fahrzeuginsassen, ein zweites Steuergerät zur Ansteuerung eines elektromotorischen Gurtstraffers, eine Vorrichtung zur Ansteuerung eines elektromotorischen Gurtstraffers und ein Verfahren zur Ansteuerung eines elektromotorischen Gurtstraffers vorgeschlagen, die sich dadurch auszeichnen, dass in einem Zyklus für die Übertragung eines Unfallsignals von einer Unfallsensorik vom zweiten Steuergerät zum ersten Steuergerät zusätzliche Daten zwischen dem ersten und dem zweiten Steuergerät ausgetauscht werden, die die Anstcucrung des clcktromotorischcn Gurtstraffcrs betreffen.

## Beschreibung

### Stand der Technik

Die Erfindung betrifft ein erstes Steuergerät zur Bestimmung einer Gefährdung wenigstens eines Fahrzeuginsassen, ein zweites Steuergerät zur Ansteuerung eines elektromotorischen Gurtstraffers, einer Vorrichtung zur Ansteuerung eines elektromotorischen Gurtstraffers und ein Verfahren zur Ansteuerung eines elektromotorischen Gurtstraffers nach der Gattung der unabhängigen Patentansprüche.

Aus DE 103 60 722 A1 ist es bereits bekannt, ein Verfahren und eine Vorrichtung zur Erhöhung des Insassenschutzes bei einem defekten Reifen eines Kraftfahrzeugs vorzusehen. Dabei kann in Abhängigkeit von den erfassten Reifendruckdaten ein Presafe-System, bzw. ein Sitzgurtstraffersystem angesteuert werden.

### Offenbarung der Erfindung

Das erste erfindungsgemäße Steuergerät zur Bestimmung einer Gefährdung wenigstens eines Fahrzeuginsassen, das zweite erfindungsgemäße Steuergerät zur Ansteuerung eines elektromotorischen Gurtstraffers, die Vorrichtung zur Ansteuerung eines elektromotorischen Gurtstraffers und das Verfahren zur Ansteuerung eines elektromotorischen Gurtstraffers mit den Merkmalen der unabhängigen Patentansprüche haben demgegenüber den Vorteil, dass durch die Verwendung einer Punkt-zu-Punkt-Verbindung zwischen dem ersten und dem zweiten Steuergerät für die Übertragung wengistens eines Ansteuerbefehls in wenigstens einem Zyklus, der bereits für die Übertragung eines Unfallsignals in umgekehrter Richtung verwendet wird, eine bereits verwendete, zuverlässige Technik in einfacher Art und Weise für einen zusätzlichen Nutzen eingesetzt werden kann.

Der Zyklus ist die Länge eines Takts, in dem wenigstens ein Datenpaket des Unfallsignals übertragen wird. Dabei ist die Länge so, dass noch Platz für die Übertragung weiterer Daten in beliebiger Richtung vorhanden ist. Als Übertragungsprotokoll für die weiteren Daten, also den Ansteuerbefehl, kann das Handshakeverfahren verwendet werden.

Insbesondere können dabei bekannte Stromschnittstellen, die eine Powerline-Datenübertragung ermöglichen, verwendet werden. Diese Datenübertragung zeichnet sich durch eine hohe Robustheit gegenüber EMV-Störungen aus. Für die Übertragung des Unfallsignal wäre lediglich eine unidirektionale Datenverbindung erforderlich. Um jedoch für die erfindungsgemäße Funktion brauchbar zu sein, muss die Schnittstelle bidirektional ausgeführt werden. Als Unfallsensorik kommt dabei eine Beschleunigungssensorik und/oder eine Körperschallsensorik in Frage.

Insbesondere ermöglicht die Integration des Unfallsensors in das zweite Steuergerät eine Einsparung von Gehäusen.

Insbesondere kann durch die bidirektionale Datenverbindung zwischen den Steuergeräten im zweiten Steuergerät auf einen Safing-Controller im zweiten Steuergerät verzichtet werden, da diese Überwachungsfunktion durch das erste Steuergerät erfolgt.

Bei einer Aufteilung der Funktion auf die beiden Steuergeräte ist es möglich, neben der Gefährdungsbestimmung auch Komfort und Warnfunktionen in das erste Steuergerät zu integrieren. Damit können dann Speicher, wie ein EEPROM im zweiten Steuergerät entfallen. Vorteilhafter Weise kann jedoch das zweite Steuergerät die Komfort- und Warnfunktion übernehmen, da im zweiten Steuergerät sowieso ein Mikrocontroller vorzusehen ist und dessen Rechenleistung durch die übrigen Funktionen, für die er notwendig ist, nicht ausgelastet ist.

Die Schnittstellen sind insbesondere hardwaremäßig aufgebaut, wobei sie zumindest einen integrierten Schaltkreis aufweisen können. Es ist möglich, die Schnittstellen zumindest teilweise softwaremäßig bereitzustellen, beispielsweise als Softwaremodul auf dem Mikrocontroller des ersten Steuergeräts.

Die Auswerteschaltung soll insbesondere ein Mikrocontroller oder ein anderer Prozessor sein. Es ist jedoch möglich, auch andere ASICs oder diskrete Schaltungen dafür zu verwenden. Als Prozessor kommen Mikroprozessoren oder Mikrocontroller oder digitale Signalprozessoren in Frage.

Das Sensorsignal kann ein Signal oder eine Mehrzahl oder eine Verknüpfung von einzelnen Signalen von Sensoren sein. Das Sensorsignal kann durch Unfallsensoren und/oder Umfeldsensoren und/oder Fahrdynamiksensoren und/oder Raddrehzahlsensoren oder von anderen Sensoren erzeugt werden.

Der Ansteuerbefehl kann in einem oder mehreren Zyklen übertragen werden und enthält Parameter, die es dem zweiten Steuergerät ermöglichen, den Gurtstraffer anzusteuern. Dieser Ansteuerbefehl kann auch als Aktivierungssignal bezeichnet werden.

Durch die in den abhängigen Ansprüchen aufgeführten Maßnahmen und Weiterbildungen sind vorteilhafte Verbesserungen der in den unabhängigen Patentansprüchen angegebenen Steuergeräten, Vorrichtung und Verfahren möglich.

Besonders vorteilhaft ist, dass das erste Steuergerät über seine zweite Schnittstelle mittels eines Handshake-Verfahrens eine Überwachung des zweiten Steuergeräts durchführt. Dies kann beispielsweise dadurch geschehen, dass nachdem Beschleunigungssignale über die zweite Schnittstelle empfangen wurden, das sogenannte Handshake ablaufen zu lassen. Dabei sendet beispielsweise das erste Steuergerät über die zweite Schnittstelle die Fragen, ob der Mikrocontroller im zweiten Steuergerät in Ordnung ist. Die dritte Schnittstelle im zweiten Steuergerät empfängt diese Frage und leitet diese über eine SPI-Bus an den angefragten Mikrocontroller weiter. Der Mikrocontroller antwortet und sendet dabei über den SPI-Bus an die dritte Schnittstelle seine Antwort. Über die zweite Schnittstelle empfängt dann das erste Steuergerät dessen Antwort und beurteilt, ob diese Antwort stimmt. Wenn die Antwort dann nicht stimmt, kann vorzugsweise über die zweite Schnittstelle ein Abschaltebefehl erfolgen. Dieser Abschaltebefehl wird empfangen und führt zum Anlegen einer Dauerspannung, um die Spannungsversorgung der Ansteuerungsschaltung für den Elektromotor zu sperren.

Die hier aufgezeigten Schnittstellen sind software- oder hardwaremäßig ausgeführt. Bei einer hardwaremäßigen Lösung ist eine diskrete oder integrierte Lösung möglich. Als Softwaremodule können diese beispielsweise auf den Mikrocontrollern vorhanden sein.

Das erste Steuergerät kann über die zweite Schnittstelle den Ansteuerbefehl bzw. das Aktivierungssignal versenden, das aussagt, dass der Gurtstraffer zu aktivieren ist. In diesem Signal kann eine Anforderung für die Gurtkraft enthalten sein, so dass das zweite Steuergerät weiß, welche Gurtkraft zu applizieren ist.

Das erste Steuergerät kann weiterhin über die zweite Schnittstelle eine Fahrzeuggeschwindigkeit oder ein Zustandssignal über das Gurtschloss und/oder ein Abschaltsignal versenden. Die Fahrzeuggeschwindigkeit kann zur Bestimmung, mit welcher Gurtkraft eine Ansteuerung erfolgen soll, verwendet werden. Das Zustandssignal über das Gurtschloss gibt an, ob das Gurtschloss gesteckt ist oder nicht. Ist es nicht gesteckt, kann eine Ansteuerung unterbleiben.

Vom zweiten zum ersten Steuergerät kann eine Gurtauszugslänge übertragen werden, wobei dann die Auswerteschaltung im ersten Steuergerät beispielsweise ein Mikrocontroller in Abhängigkeit von der Gurtauszugslänge ein Warnsignal und/oder ein Kraftsignal erzeugt, wobei das Warnsignal oder das Kraftsignal zur Ansteuerung des Gurtstraffers verwendet werden, d. h sie werden über die zweite Schnittstelle an das zweite Steuergerät übertragen.

Die Erfindung zeichnet sich also dadurch aus, dass das zweite Steuergerät, das zur Ansteuerung des Gurtstraffers dient und damit auch eine Ansteuerschaltung für den Gurtstraffer aufweist, einen Unfallsensor, vorzugsweise ein Beschleunigungssensor aufweist, für den eine Datenübertragung zu einem zentralen Steuergerät, beispielsweise dem Airbagsteuergerät, vorgesehen ist. Dies ist das erste Steuergerät. Diese Schnittstelle für die Datenübertragung wird nun so erweitert, dass eine bidirektionale Datenübertragung möglich ist und den Austausch von Daten zwischen den Steuergeräten in einer zuverlässigen Art und Weise ermöglicht.

Ausführungsbeispiele der Erfindung sind in der Zeichnung dargestellt und werden in der nachfolgenden Beschreibung näher erläutert.

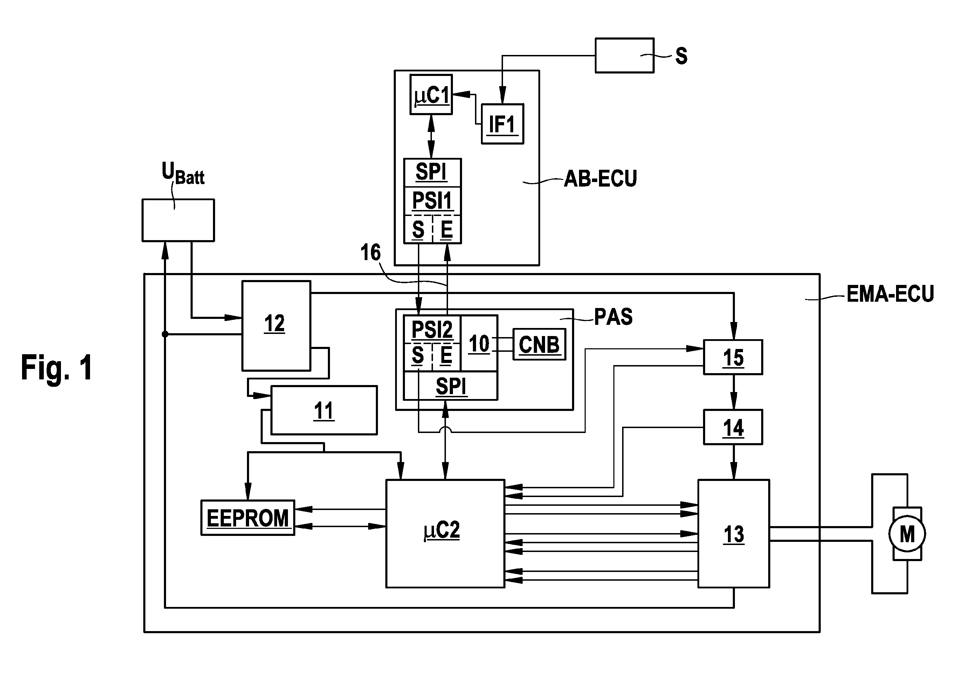

Es zeigen Figur 1 ein Blockschaltbild der erfindungsgemäßen Vorrichtung,
Figur 2 ein Timing-Diagramm für die übertragenen Daten,
Figur 3 ein Flussdiagramm des erfindungsgemäßen Verfahrens und
Figuren 4 und 5 jeweils die Aufteilung von Softwarefunktionen zwischen den beiden Steuergeräten.

Figur 1 zeigt in einem Blockschaltbild die erfindungsgemäße Vorrichtung, die aus den beiden Steuergeräten besteht, die über eine Punkt-zu-Punkt-Verbindung miteinander verbunden sind. Das Airbagsteuergerät AB-ECU dient vorliegend als erstes Steuergerät und damit zur Bestimmung der Gefährdung des wenigstens einen Fahrzeuginsassen. Komponenten, die für den Betrieb der Steuergeräte notwendig sind, aber zum Verständnis der Erfindung nicht beitragen, sind der Einfachheit halber vorliegend weggelassen worden.

Um die Gefährdung des wenigstens einen Fahrzeuginsassen zu bestimmen, benötigt das Airbagsteuergerät AB-ECU Sensordaten. Diese werden einerseits über eine erste Schnittstelle IF1 von externen Sensoren, wie Umfeld-, ESP- und/oder Aufprallsensoren und andererseits von internen Sensoren, die hier der Einfachheit halber nicht dargestellt werden, empfangen. Darüber hinaus dient auch die PSI-Schnittstelle PSI1 mit ihren Sende- S und Empfangseinheiten E zur Bereitstellung von Sensordaten und zwar vorliegend vom Beschleunigungssensor CNB aus dem zweiten Steuergerät.

Als Auswerteschaltung zur Ermittlung der Gefährdung wird vorliegend ein Mikrocontroller µC1 verwendet. Es ist jedoch möglich, andere Prozessortypen einzusetzen. In Abhängigkeit von dem Gefährdungssignal veranlasst der Mikrocontroller µC1 über einen SPI-Bus SPI zur PSI-Schnittstelle PSI1 eine Datenübertragung, so dass die PSI-Schnittstelle PSI1 über die Punkt-zu-Punkt-Verbindung 16 zu einer weiteren PSI-Schnittstelle PSI2 ihre Daten übertragen kann. Stellt der Mikroncontroller µC1 beispielsweise fest, dass eine Ansteuerung des Gurtstraffers von Nöten ist und welche Kraft hierfür erforderlich ist, dann überträgt der Mikroncontroller µC1 das Aktivierungssignal oder den Ansteuerbefehl zur EMA-ECU, wobei das Aktivierungssignal das Kraftniveau enthält, mit dem der Gurtstraffer betätigt werden soll. Daneben können noch weitere Daten vom Airbagsteuergerät AB-ECU zum Steuergerät EMA-ECU zur Ansteuerung von elektromotorischen Gurtstraffern übertragen werden.

Dazu zählen die Eigengeschwindigkeit des Fahrzeugs, ob das Gurtschloss gesteckt ist oder nicht oder ein Abschaltesignal für das Steuergerät EMA-ECU.

Charakteristisch für die Datenübertragung über die Leitungen 16, bei der es sich vorzugsweise um eine Zweitdrahtleitung handelt, ist das vom Steuergerät EMA-ECU über den Abschnitt PAS Signale des Unfallsensors CNB über die Schnittstelle PSI2 zum Airbagsteuergerät AB-ECU übertragen werden. Damit verbindet das Steuergerät EMA-ECU zwei Funktionen. Nämlich zum einen die Ansteuerung des Gurtstraffers und zum anderen die Bereitstellung eines Unfallsensors, vorliegend einer Beschleunigungssensorik CNB, die vorzugsweise in Fahrzeugquerrichtung, aber auch zusätzlich oder anstatt in anderen Raumrichtungen empfindlich sein kann. Diese Beschleunigungssignale werden üblicherweise mit 2 kHz Datenübertragungsrate vom Steuergerät EMA-ECU zum Steuergerät AB-ECU übertragen. Die Übertragung setzt ein, sobald ein Synchronisationsimpuls vom Airbagsteuergerät AB-ECU von der Schnittstelle PSI1 kommt. Dieser Synchronisationsimpuls wird über einen Sendemodul S des von der Schnittstelle PSI1 im Airbagsteuergerät AB-ECU übertragen und dort im Steuergerät EMA-ECU im Abschnitt PAS vom Empfangsmodul E der Schnittstelle PSI2 empfangen. Der Synchronisationsimpuls wird üblicherweise nach einem Powerup-Vorgang übertragen. Nach dem Synchronisationsimpuls können auch zunächst Initialisierungsdaten des Sensors CNB übertragen werden, wie beispielsweise Daten, die seine Funktionsfähigkeit belegen.

Die Beschleunigungssensorik CNB weist wenigstens ein mikromechanisches Element auf, das beschleunigungsempfindlich ist, üblicherweise mikromechanisch hergestellt. Die Beschleunigung wird dabei über eine Kapazitätsänderung beispielsweise ermittelt und eine Kapazitätsspannungswandlung liefert dann einen entsprechenden Spannungswert, der für die gemessene Beschleunigung charakteristisch ist. Dieser Spannungswert wird verstärkt und digitalisiert durch das Frontend 10. Dann erfolgt die Übertragung über das Sendemodul S von PSI2. Im Airbagsteuergerät AB-ECU wird durch das Empfangsmodul E von PSI1 das Beschleunigungssignal empfangen. Über den SPI-Bus SPI erfolgt dann die Übertragung zum Mikrocontroller µC1, der beispielsweise mittels eines Auswertealgorithmus anhand von Fahrdynamik- und/oder Umfelddaten das Gefährdungspotential für den wenigstens einen Fahrzeuginsassen bestimmt.

Weiterhin weist das Airbag-ECU Softwaremodule auf, wie ein Auslösealgorithmus, der mittels des Beschleunigungssignals diesen Auslösealgorithmus rechnet, ob Personenschutzmittel wie Airbags oder pyrotechnische Gurtstraffer angesteuert werden sollen. Weiterhin kann das Airbagsteuergerät AB-ECU auch Komfort- und Warnfunktionen aufweisen, um das Kraftniveau für den Fahrer bei einer Komfortfunktion möglichst angenehm bei dem Gurtstraffer zu halten oder bei Warnungen, die beispielsweise bei einem Spurverlassen auftreten oder einer Gefährdung, den Gurtstraffer über das Steuergerät EMA-ECU so aktivieren, dass der Fahrer gewarnt wird. In dem Zyklus, in dem das Beschleunigungssignal übertragen wird, kann ein weiteres Datenpaket zwischen den Steuergeräten AB-ECU bzw. EMA-ECU ausgetauscht werden, wobei dieses Datenpaket Ansteuerungsinformationen an das Steuergerät EMA-ECU bezüglich des Gurtstraffers aufweisen kann oder einen Test, der Komponenten des Gurtstraffers oder Daten über den Gurtstraffer, die das Airbagsteuergerät AB-ECU benötigt, um seine Ansteuerung festzulegen.

Die Schnittstelle PAS sorgt also dafür, dass die Beschleunigungssignale zum Airbagsteuergerät AB-ECU übertragen werden. Damit nun auch die Daten des Steuergeräts EMA-ECU an das Airbagsteuergerät AB-ECU übertragen werden, sorgt die Schnittstelle PAS dafür, dass diese Signale mit den Beschleunigungssignalen in einem Zyklus übertragen werden. In gleicher Art und Weise werden Signale, die vom Airbagsteuergerät AB-ECU kommen, an einen Mikrocontroller µC2 im Steuergerät EMA-ECU weitergeleitet, so dass dieser die entsprechenden Anweisungen des Airbagsteuergeräts AB-ECU ausführen kann.

Zu diesen Anweisungen gehört ein Test des Mikroncontrollers µC2. Diesen Test muss der Mikroncontroller µC2 bestehen, indem ihm beispielsweise vom Airbagsteuergerät AB-ECU eine Frage gestellt wird. Diese Frage muss der Mikrocontroller µC2, beispielsweise eine Rechnung, korrekt beantworten, um seine Funktionsfähigkeit unter Beweis zu stellen. Dazu überträgt das Airbagsteuergerät AB-ECU die Frage über die Leitungen 16 zum Mikrocontroller µC2 im Steuergerät EMA-ECU. Dort wird durch den Mikrocontroller µC2 eine Antwort berechnet, die dann wiederum über die Leitungen 16 zum Mikrocontroller µC1 im Airbagsteuergerät AB-ECU übertragen wird, so dass dieser Mikroncontroller µC1 prüft, ob der Mikrocontroller µC2 im Steuergerät EMA-ECU korrekt funktioniert. In dem Falle, dass der Mikroncontroller µC2 diesen Test nicht besteht, erfolgt eine Sperrung des Steuergeräts EMA-ECU, und zwar bezüglich des Mikrocontrollers µC2. Die Signale des Beschleunigungssensors CNB können weiterhin übertragen werden. Das Steuergerät EMA-ECU wird dabei derart gesperrt, dass von der Schnittstelle PAS ein Abschaltebefehl über eine Dauerspannung an einen Schalter 15 im Steuergerät EMA-ECU übertragen wird, der durch diese Dauerspannung gesperrt wird, und zwar hinsichtlich der Spannungsversorgung der Ansteuerungsschaltung für einen Elektromotor M für den Gurtstraffer. Der Schalter 15 ist nämlich mit einem Spannungsversorgungsbaustein 12, der integriert oder diskret aufgebaut sein kann, verbunden und schaltet im Betriebsfall angesteuert durch den Mikrocontroller µC2 diese Spannung über eine Strommessung 14 zu einem Ansteuerungsbaustein 13 für den Motor M durch. Der Spannungsversorgungsbaustein 12 entnimmt seine Spannungsversorgung aus der Batteriespannung U_{Batt}. Der Spannungsversorgungsbaustein 12 versorgt dann mit einer Referenzspannung einen weiteren Baustein 11, der die notwendige Spannung für den Mikrocontroller µC2 und einen Speicher EEPROM bereitstellt. Dieser Speicher EEPROM ist notwendig, wenn der Mikrocontroller µC2 die Komfort- und Warnfunktionen bezüglich des Gurtstraffers ausführen soll.

Soll der Mikrocontroller µC2 jedoch den Motor ansteuern, dann wird die Ansteuerung 13 entsprechend angesteuert. Dazu können verschiedene Leistungsschalter in der Ansteuerung 13 aktiviert werden. Darüber hinaus wird die Temperatur sensiert, es erfolgt eine Strommessung und andere Diagnosefunktionen.

Entscheidend ist, dass in einem Zyklus, in dem Signale einer Unfallsensorik von dem Steuergerät EMA-ECU zum Airbagsteuergerät AB-ECU übertragen werden, weitere Daten ausgetauscht werden, die bezüglich des Gurtstraffers relevant sind. Dazu können die Softwarefunktionen, die für die Ansteuerung des Gurtstraffers notwendig sind, auf die Steuergeräte AB-ECU und EMA-ECU verteilt werden.

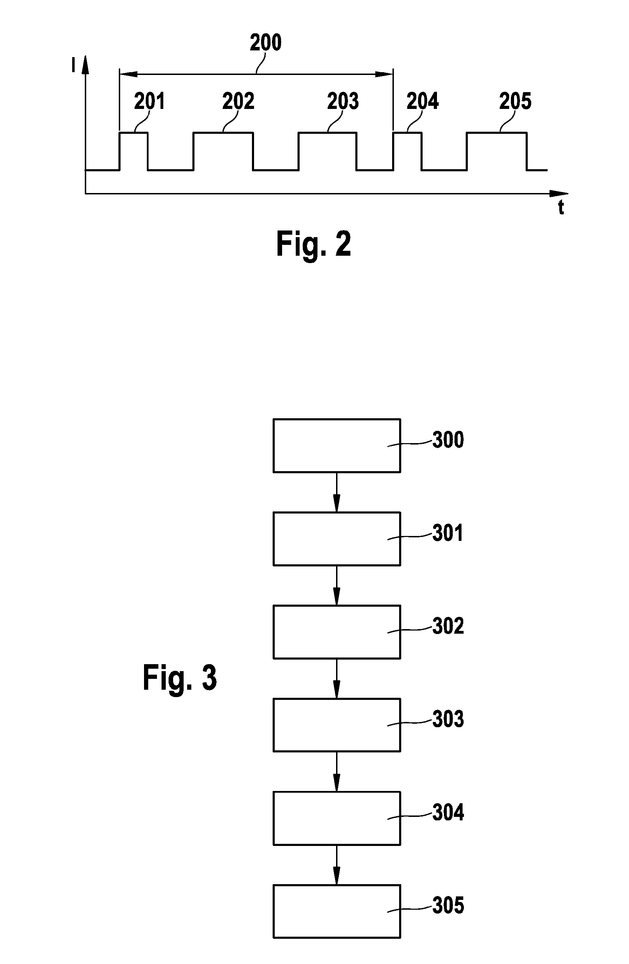

Figur 2 zeigt ein Timing-Diagramm der Übertragung über die Leitungen 16 mittels der Schnittstellen PSI 1 und 2. Es ist ein Stromzeitdiagramm dargestellt, um die Datenimpulse darzustellen. Der Zyklus ist durch das Bezugszeichen 200 gekennzeichnet. Er wird immer eingeleitet durch ein Synchronimpuls 201 bzw. im folgenden Zyklus 204. Dann folgt ein Datenpaket 202, das hier vorzugsweise 11 Bit aufweist mit einem Identifyer von 2 Bit, 8 Bit Daten und einem Bit für den Parity Check. Die Zeit eines Zyklusses ist 500 Mikrosekunden. Die Zeit ab dem Synchronimpuls 201 bis zum Ende des Zyklusses 200 reicht, um ein weiteres Datenpaket zu übertragen. Dies ist durch das Bezugszeichen 203 dargestellt. Andere Werte für die angegebenen Daten und die Datengrößen können je nach Bedarf verwendet werden.

In diesem zusätzlichen Datenpaket 203, das vorliegend immer auf das Datenpaket mit den Beschleunigungsdaten folgt, kann eine Gurtkraftanforderung vom Airbagsteuergerät AB-ECU übertragen werden. Diese Gurtkraftanforderung kann beispielsweise 2 Byte größer aufweisen, wobei ein Byte zur Auswahl des Fahrers bzw. Beifahrers dient und das zweite Byte zur Höhe der Kraft, die beispielsweise von 0 bis 250 Newton reicht. Für diese Übertragung sind vier Zyklen notwendig. Die beschriebenen Daten werden vom Airbagsteuergerät AB-ECU an das Gurtstraffersteuergerät EMA-ECU übertragen.

Durch das Bezugszeichen 205 ist das Sensorsignal im folgenden Zyklus gekennzeichnet.

Eine weitere Information ist die Fahrzeuggeschwindigkeit, die als ein Byte Größe vorliegt und damit zwei Zyklen benötigt. Die Fahrzeuggeschwindigkeit kann von 0 bis 255 km/h beispielsweise ausgelegt sein.

Weitere zwei Zyklen können für eine Gurtschlossinformation bezüglich Fahrer und Beifahrer übertragen werden. Dazu ist ein Byte Größe notwendig, wobei drei Bit davon lediglich benutzt werden müssen.

Ein weiteres Beispiel ist die Überwachung des Gurtstraffersteuergeräts EMA-ECU, das über ein Handshaking-Verfahren durchgeführt wird. Dazu wird das oben beschriebene Frage-Antwort-Muster verwendet. Ein Byte wird für die Frage verwendet und ein Byte für die Antwort.

Ein weiteres Beispiel ist die Abschaltinformation für das Steuergerät EMA-ECU. Dafür ist lediglich ein Byte Größe und damit zwei Zyklen erforderlich.

Die doppelte Anzahl von Zyklen, die für die Übertragung notwendig ist, ist dadurch begründet, dass bei der Übertragung einer Information diese gespiegelt wird, um sicherzustellen, dass diese korrekt ankam. Andere Verfahren, die bekannt sind, um eine Übertragung sicher zu machen, wie beispielsweise eine Information zweimal übertragen oder ein Automatik-Request-Verfahren, sind möglich.

Zählt man alle Zyklen zusammen, bekommt man 12 Zyklen. Dies entspricht 6 ms. Diese Zeit reicht bei weitem für die Übertragung der Information aus. Im Vergleich dazu: der Algorithmus zur Berechnung der Gefahrenwertdetektion bekommt seine Eingangssignale in einem 20 ms Raster und kann damit das Ergebnis einer neuen Berechnung im 20 ms Raster auch nur ausgeben.

Figur 3 erläutert in einem Flussdiagramm das erfindungsgemäße Verfahren. In Verfahrensschritt 300 sendet das Airbagsteuergerät AB-ECU den Synchronisationsimpuls. Daraufhin wird in Verfahrensschritt 301 eine Übertragung der Beschleunigungssignale vorgenommen. Im Zyklus kann nun auch ein weiteres Datenpaket übertragen werden, um die oben genannten Daten zu übertragen. Dazu wird vorliegend in Verfahrensschritt 302 in einem Handshake-Verfahren eine Test des Steuergeräts durchgeführt, und zwar in der oben beschriebenen Weise, indem vom Airbagsteuergerät AB-ECU an das Gurtstraffersteuergerät EMA-ECU eine Frage gestellt wird, die der Mikrocontroller µC2 im Gurtstraffersteuergerät EMA-ECU korrekt beantworten muss. Weitere Informationen werden in den folgenden Verfahrensschritten übertragen. Es wird eine Gurtkraftanforderung in Verfahrensschritt 303 an das Gurtstraffersteuergerät EMA-ECU übertragen. Auch die Eigengeschwindigkeit und eine Gurtschlossinformation, die über eine Gurtschlosssensorik erfasst werden kann, werden in Verfahrensschritt 304 an das Gurtstraffersteuergerät EMA-ECU vom Airbagsteuergerät AB-ECU übertragen. Auch der Abschaltbefehl kann in Verfahrensschritt 305 entsprechend übertragen werden. Dieser Abschaltbefehl ist jedoch im Zusammenhang mit Verfahrensschritt 302 zu sehen.

Anstatt eines Airbagsteuergeräts AB-ECU kann auch ein anderes Steuergerät, wie beispielsweise ein ESP-Steuergerät oder ein Sicherheitssteuergerät, das viele Funktionen, wie auch die Fahrdynamikregelung, vereinigt, mit dem Gurtstraffersteuergerät kommunizieren.

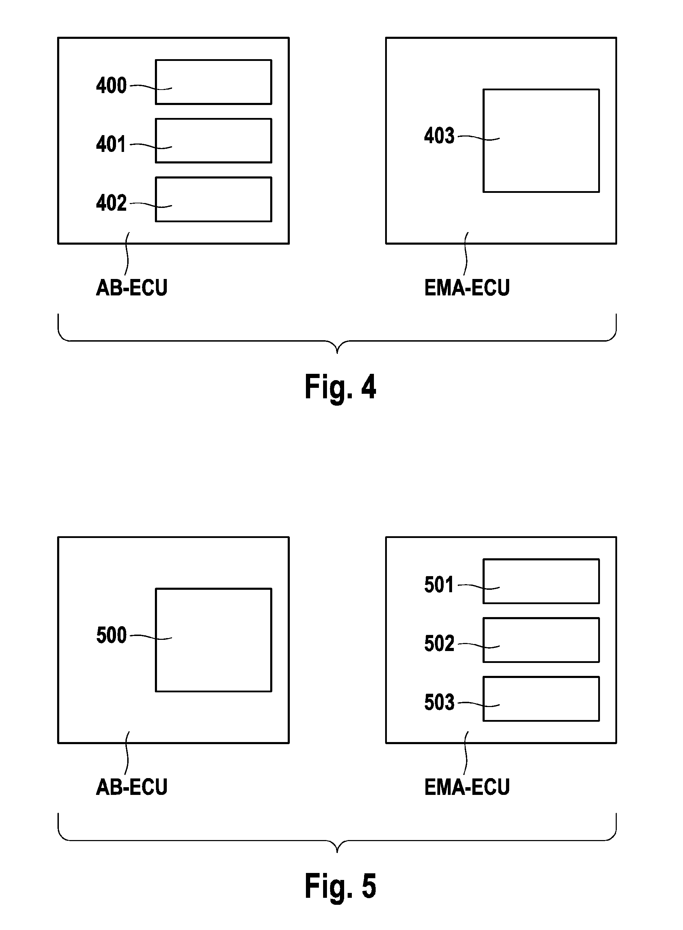

Figur 4 zeigt eine erste Aufteilung der Softwarefunktionen bezüglich des Gurtstraffers auf die beiden Steuergeräte. In Figur 4 wird dargestellt, dass im Airbagsteuergerät AB-ECU ein Softwaremodul zur Bestimmung der Gefahr 400, eine Komfortfunktion 401 und eine Warnungsfunktion 402 ablaufen, während im Gurtstraffersteuergerät EMA-ECU lediglich das Softwaremodul 403, also eine Überwachung des Steuergeräts, ablaufen.

Dazu zeigt Figur 5 eine alternative Aufteilung, wobei im Airbagsteuergerät AB-ECU lediglich das Gefahrenbestimmungsmodul 500 vorhanden ist, während die anderen Module, wie Komfortfunktion 501, die Warnungsfunktion 502 und die Überwachungsfunktion 503 im Gurtstraffersteuergerät EMA-ECU vorhanden sind.

## Patentansprüche

1. Erstes Steuergerät zur Bestimmung einer Gefährdung wenigstens eines Fahrzeuginsassen mit:
- einer ersten Schnittstelle (IF1), die ein Sensorsignal bereitstellt,
- einer zweiten Schnittstelle (PSI1), die eine bidirektionale Kommunikation mit einem zweiten Steuergerät zur Ansteuerung eines elektromotorischen Gurtstraffers ermöglicht, wobei die zweite Schnittstelle zusätzlich ein Unfallsignal einer Unfallsensorik bereitstellt und zur Übertragung von wenigstens einem Ansteuerbefehl an das zweite Steuergerät konfiguriert ist,
- einer Auswerteschaltung (µC1), die in Abhängigkeit von dem Sensorsignal die Gefährdung bestimmt und in Abhängigkeit von der Gefährdung den wenigstens einen Ansteuerbefehl über die zweite Schnittstelle (PSI1) versendet, wobei der wenigstens eine Ansteuerbefehl in wenigstens einem Zyklus für die Übertragung des Unfallsignals eingefügt wird.

2. Erstes Steuergerät nach Anspruch 1, **dadurch gekennzeichnet, dass** die Auswerteschaltung (µC1) derart konfiguriert ist, dass die Auswerteschaltung (µC1) über die zweite Schnittstelle (PSI1) mittels eines Handshake-Verfahrens eine Überwachung des zweiten Steuergeräts durchführt.

3. Erstes Steuergerät nach Anspruch 1 oder 2, **dadurch gekennzeichnet, dass** der Ansteuerbefehl einen Wert für die Gurtkraft aufweist.

4. Erstes Steuergerät nach einem der vorherigen Ansprüche, **dadurch gekennzeichnet, dass** die Auswerteschaltung (µC1) derart konfiguriert ist, dass die Auswerteschaltung (µC1) über die zweite Schnittstelle (PSI1) eine Fahrzeuggeschwindigkeit und/oder ein Zustandssignal über ein Gurtschloss und/oder ein Abschaltsignal versendet.

5. Erstes Steuergerät nach einem der vorherigen Ansprüche, **dadurch gekennzeichnet, dass** die zweite Schnittstelle (PSI1) eine Gurtauszugslänge bereitstellt, wobei die Auswerteschaltung (µCl) in Abhängigkeit von der Gurtauszugslänge ein Warnsignal und/oder ein Kraftsignal erzeugt über das Warnsignal und/oder das Kraftsignal zur Ansteuerung des Gurtstraffers verwendet werden.

6. Zweites Steuergerät zur Ansteuerung eines elektromotorischen Gurtstraffers mit:
- einer dritte Schnittstelle (PSI2), die einen Ansteuerbefehl eines ersten Steuergeräts zur Bestimmung einer Gefährdung wenigstens eines Fahrzeuginsassen bereitstellt und zur Versendung eines Unfallsignals einer Unfallsensorik, die dem zweiten Steuergerät (EMA-ECU) zugeordnet ist, an das erste Steuergerät konfiguriert ist,
- einem Prozessor (µC2), der in Abhängigkeit von dem Signal einen Elektromotor (M) ansteuert.

7. Zweites Steuergerät nach Anspruch 6, **dadurch gekennzeichnet, dass** die dritte Schnittstelle (PSI2) mittels eines Handshake-Verfahrens mit dem ersten Steuergerät (AB-ECU) eine Überwachung des zweiten Steuergeräts (EMA-ECU) ermöglicht.

8. Vorrichtung zur Ansteuerung eines elektromotorischen Gurtstraffers mit :
- einem ersten Steuergerät zur Bestimmung einer Gefährdung wenigstens eines Fahrzeuginsassen, wobei das erste Steuergerät über eine bidirektionale Übertragung mit einem zweiten Steuergerät zur Ansteuerung des elektromotorischen Gurtstraffers ein Unfallsignal empfängt und wenigstens einen Ansteuerbefehl für den Gurtstraffer an das zweite Steuergerät überträgt,
- dem zweiten Steuergerät, das eine Unfallsensorik (CNB) aufweist, wobei die bidirektionale Übertragung zwischen dem ersten und dem zweiten Steuergerät derart konfiguriert ist, dass in wenigstens einem Zyklus für die Übertragung des Unfallsignals der wenigstens eine Ansteuerbefehl zwischen dem ersten und zweiten Steuergerät übertragen wird.

9. Verfahren zur Ansteuerung eines elektromotorischen Gurtstraffers mit folgenden Verfahrensschritten:
- Bestimmung einer Gefährdung mittels eines ersten Steuergeräts (AB-ECU)
- Erzeugung wenigstens eines Ansteuerbfehls in Abhängigkeit von der Gefährdung und Übertragung des wenigstens einen Ansteuerbefehls an ein zweites Steuergerät,
- Ansteuerung des Gurtstraffers in Abhängigkeit von dem wenigstens einen Ansteuerbefehl,
- Übertragung des wenigstens einen Ansteuerbefehls in wenigstens einem Zyklus, der für eine Übertragung eines Unfallsignals vom zweiten Steuergerät zum ersten Steuergerät vorgesehen ist.

10. Verfahren nach Anspruch 9, **dadurch gekennzeichnet, dass** der wenigstens eine Ansteuerbefehl einen Wert für die Kraft, mit der der Gurtstraffer angesteuert werden soll, aufweist.

11. Verfahren nach Anspruch 9 oder 10, **dadurch gekennzeichnet, dass** eine Überwachung des zweiten Steuergeräts durch das erste Steuergerät mittels eines Handshake-Verfahrens durchgeführt wird.

12. Verfahren nach Anspruch 9, 10 oder 11, **dadurch gekennzeichnet, dass** vom zweiten Steuergerät zum ersten Steuergerät eine Gurtauszugslänge übertragen wird, wobei in Abhängigkeit von der Gurtauszugslänge ein Warnsignal und/oder ein Kraftsignal in dem wenigstens einem Ansteuerbefehl vom ersten Steuergerät an das zweite Steuergerät übertragen wird.

13. Verfahren nach Anspruch 11 oder 12, **dadurch gekennzeichnet, dass** vom ersten Steuergerät an das zweite Steuergerät ein Abschaltsignal in dem wenigstens einem Ansteuerbefehl übertragen wird.
